# EUROPEAN PATENT SPECIFICATION

(11) **EP 2 326 834 B1**
(45) Date of publication and mention of the grant of the patent: **08.06.2016**
(21) Application number: 09808458.5
(22) Date of filing: 12.08.2009
(51) Int. Cl.: F03D 7/02, F03D 13/25, F03D 1/02

(54) **A WIND POWER ARRANGEMENT WITH PITCHABLE BLADES**
WINDTURBINENANORDNUNG MIT PITCHBAREN ROTORBLÄTTERN
CENTRALE ÉOLIENNE AVEC DES PALES À PAS VARIABLE

(30) Priority: 18.08.2008 SE 0801804
(43) Date of publication of application: 01.06.2011
(73) Proprietor: FLOWOCEAN Limited, Road Town, Tortola (VG)
(72) Inventor: MORITZ, Bertil, S-723 48 Västerås (SE)
(74) Representative: Karlsson, Leif Gunnar Börje
(86) International application number: PCT/SE2009/050930
(87) International publication number: WO 2010/021585

(56) References cited:
- EP-A1- 1 666 723
- EP-A1- 1 666 723
- EP-A1- 2 037 119
- WO-A1-99/02856
- WO-A1-99/02856
- DE-A1- 19 846 796
- DE-A1-102004 049 506
- FR-A1- 2 890 706
- FR-A1- 2 890 706
- US-A1- 2003 168 864

## Description

### TECHNICAL FIELD OF THE INVENTION

This invention generally refers to an arrangement with means for changing the pitch of the propeller blade of a turbine.

The invention is expected to be applied in water borne wind power plants.

For the first application it applies that the invention refers to and is intended to be used in an arrangement for creating prerequisites for generating electric power and electric energy from a prevailing wind force and the direction of the wind.

More particularly, in a first application it is a matter of indicating a specific means and an arrangement associated with the means for keeping the propeller blades (wind-driven propellers) of a plurality of turbines at a right angle to an eye of the wind.

Arrangements of this type can then comprise: a; individual but coordinated pontoon units that may float in the body of water, b; a plurality of, at least two, adjacent to each other oriented and coordinated turbines (wind-driven propellers), c; a mooring system solidly anchored to a restricted bottom area of said body of water, d; a generator unit which may be driven by the rotating motion of a turbine for generating said electric power, e; a cable section connected on the one hand to said generator unit and on the other hand to a land based distribution network adapted for distributing generated electric power.

The present invention has been created with the purpose of providing a utilization in "An arrangement related to a body of water" of a character such as is more specifically shown and described in Swedish Patent Application No. 08 00945-8, filed on April 24, 2008 (Corresponding to the International Patent Application Serial Number PCT/SE2009/050396)

### BACKGROUND OF THE INVENTION

Methods, arrangements and structures related to the technical area mentioned above and having a function and a character which fulfil requirements set up are known earlier in a plurality of different embodiments.

With regard to arrangements of the relevant type and in a disclosed first application it is known earlier to structure necessary pontoons or ponton units such, that these rest and float on a body of water or to structure these as floating vertical posts with ballast belonging therto.

As examples of the first category the contents of the following Patent Publications may be mentioned, viz., NL-1008 318; EP-1 106 825-A2; US-6294 844-B1; DE-32 24 976-A1; DE 197 27 330-A1; WO-00/58621-A1; DE-198 46 796-A1 and WO-02/073032-A1.

As examples of the later mentioned category Patent Publications Nos. WO-2005/040 604-A2 and WO-03/076 800-A2 may be mentioned.

If the basic prerequisites related to the present invention are considered, then as the earlier standpoint of technology may be noted the subject matter of Patent Publication WO-2007/009 464-A1, particularly Figures 1 and 2.

Here an arrangement related to a body of water is described and more particularly an arrangement for creating prerequisites for generating electric power from a predominant force of wind and direction of the wind.

Arrangements of this type comprised: a; individual but coordinated pontoon units that may float in the body of water, b; a plurality of, at least two, adjacent to each other oriented and coordinated turbines (wind-driven propellers), c; a mooring system solidly anchored to a restricted bottom area of said body of water, d; a generator unit which may be driven by the rotating motion of one or more turbines for generating said electric power, and e; a cable section connected on the one hand to said generator unit and on the other hand to a land based distribution network distributing generated electric power.

More particularly said pontoon units are to be structured by and allotted at least two in themselves floatable, vertical or at least substantially vertical posts for i.a. forming a vertical frame portion.

At any rate an upright or the equivalent stablizing the vertical position of the frame portion in the body of water will be required.

Said two posts are flexurally rigid in themselves and are furthermore adapted for being able to vertically support an in itself flexurally rigid, horizontally oriented beam structure.

The beam structure is to be adapted and dimensioned such, that it will be able to support a plurality of said turbines.

Each one of said two posts as well as said uprights are dimensioned and/or adapted such with regard to each other that with their lower portions immersed in said body of water they keep a frame portion floating over the surface of the water.

Said uprights are furthermore to be laterally displaced by one plane, oriented through said frame portion and said two posts, with the upright being adapted on the one hand to cooperate rotatably rigidly with said frame portion and on the other hand to be attached to and be able to cooperate adheringly with said mooring system.

If the peculiarities related to the present invention are regarded it may be mentioned that it is known per se in a stationary mast adapted to the ground and a turbine with its propeller blades fastened to the top of the mast to permit the propeller blade associated with the turbine and rotatable by the force of the wind, with regard to a hub, to be rotabably disposed around a center line or ascending profile allotted to the propeller blade for improving the power taken out as related to the predominant force of the wind, and for this purpose a first means with its associated control unit, a "pitching means", is utilized.

In arrangement adapted to a body of water it is known previously to indicate a second means belonging to the arrangement for holding the propeller blade of the turbine and its rotational area or rotational range at right angles to an eye of the wind or a virtual eye of the wind.

Especially it is to be noted the content of the following Patent Publications WO-99/02856-A1, FR-2 890 706-A1 and US-2003/0129 059-A1

Patent publication WO-99/02856 is considered to disclose the most relevant prior art wherein an installation is comprising windmills (1) mounted onto a frame (5, 6, 7) and said frame is provided with float bodies (15).

The windmills (1) are capable of rotation about a vertical axis in orderto turn the windmills towards the wind.

In order to keep the windmills upright, supporting means, for example a body (16) is anchored to the bottom and disposed some distance away from the plane of the windmills.

Further it is to be mentioned that the Patent Publication US-2003/0 129 059-A1 does disclose a mechanism (16) for controlling independently the pitch of a plurality of blades (15A, 15B, 15C) of a wind turbin (10).

This wind turbine includes a hub (11) rotatable about an axis (x - x) relative to a nacelle (12), a plurality of blades mounted on the hub for rotation therewith about the hub axis, each blade having a shaft (21) and being mounted on the hube for rotation about its axis of elongation, a plurality of motors (34) mounted on the nacelle, each motor having an output shaft (35) and being associated with a respective one of the blades and a coupling mechanism (37) opereately interposed between each motor and its associated blade for selectively rotating such blade about its axis to vary the pitch of the associated blade relative to the hub axis.

The pitch of each blade may be controlled independently of the pitch of the others.

### STATEMENT OF THE PRESENT INVENTION

### TECHNICAL PROBLEM

If the circumstance is observed, that the technical considerations that a person skilled in the art within the technical field belonging here must carry out in order to offer a solution of one or more given technical problems are on the one hand initially a necessary understanding of the measures and/or the sequence of measures that are to be taken and on the other hand a necessary choice of the one or more means which are necessary, the following technical problems should in consideration of this be relevant in setting forth the present subject of invention.

Considering the earlier standpoint of technology as it has been described above it must therefore be seen as a technical problem to be able to understand the significance of, the advantages related to and/or the technical measures and considerations which will be needed for, in an arrangement related to a body of water and more particularly to an arrangement for creating prerequisites for generating electric power from a predominant power of the wind, offering a light structure which can be based on utilizing two or more vertical posts, one or more vertical uprights, and one or more bar-shaped means dimensioned for pronounced taking up of a traction force and also to offer a simple first or pitching means, active for amending the pitch during one and the same revolution, associated with the propeller so as to thereby increase the value of electric power that may be taken out.

There is a technical problem in being able to understand the significance of, the advantages related to and/or the technical measures and considerations that will be required for letting said first means or pitching means be comprised of an arrangement for mechanically controlling the pitching and its motion of the propeller blade during its rotation by means of a control unit.

There is a technical problem in being able to understand the significance of, the advantages related to and/or the technical measures and considerations which will be required for letting said first means be adapted under one revolution, over the arrangement and control unit, to provide the propeller blade with different positions of its pitch and rotation, that is different pitching positions during one single revolution.

There is a technical problem in being able to understand the significance of, the advantages related to and/or the technical measures and considerations which will be required for letting said arrangement be adapted to turn the propeller blade to a first pitching position during its entire downgoing motion or a part of said motion and adapted to turn the propeller blade to a second pitching position during the whole or a portion of its upwardly going motion, such as in dependence of predominant wind directions and forces.

There is a technical problem in being able to understand the significance of, the advantages related to and/or the technical measures and considerations which will be required for letting said arrangement be controllable by a control unit provided with a computer for in response to chosen incoming signals, i.a. in the form of relevant force of the wind, the angular positions of the propeller blades with regard to its hub, the ascent profile of the propeller blades and/or relevant air disturbances, generating one or more outgoing signals in order to change the position of rotation or pitching positions of the propeller blades towards and/or to maximized generated electric power.

There is a technical problem in being able to understand the significance of, the advantages related to and/or the technical measures and considerations which will be required for letting the arrangement of the control unit be effected by the distribution of speed of the air within the rotational field of the propeller blade.

There is a technical problem in being able to understand the significance of, the advantages related to and/or the technical measures and considerations which will be required for having said pontoon units structured by and associated with at least two per se floatable, vertical or at least essentially vertical, posts for i.a. forming a frame portion and at least one upright stabilizing the position of the frame portion in the body of water, with said two posts being adapted to be able to support a horizontally oriented beam structure which is flexurally rigid in itself and is adapted and dimensioned such as to be able to support said turbines, with each one of said two posts together with said upright being dimensioned and/or adapted such, that together with its lower partial portions immersed in said body of water it holds said frame portion, with said upright being displaced sideways by one plane, oriented through said frame portion and said two posts, and with the upright being adapted to cooperate with said frame portion and being attached to and adheringly being able to cooperate with said mooring system.

There is a technical problem in being able to understand the significance of, the advantages related to and/or the technical measures and considerations which will be required for between said uprights and each one of the two posts, a first post and a second post, there extends a bar-shaped means dimensioned for taking up a compressive force and that between said upright and each one of the first and second posts there extends at least one first means dimensioned for taking up a tractive force and in addition a second means dimensioned for taking up a tractive force.

Arrangements of the type belonging here are based on an earlier known arrangement which is to include: a; individual but coordinated pontoon units structured as the post and/or upright that may float in the body of water, b; a plurality of, at least two, adjacent to each other oriented and coordinated turbines (wind-driven propellers), c; a mooring system tightly anchored to a restricted bottom area of said body of water, d; a generator unit which may be driven by the rotating motion of a turbine for generating said electric power, and e; a cable section connected on the one hand to said generator unit and on the other hand to a land based distribution network distributing generated electric power.

More particularly said pontoon units are to be structured by and associated with at least two per se floatable, vertical or at least essentially vertical, posts for forming the main portion of a frame section.

There is a technical problem in being able to understand the significance of, the advantages related to and/or the technical measures and considerations which will be required for creating an arrangement which will be directly adapted for application at sea and therein to be able to handle strains which may be attributed to the effect of a strong wind on the wind turbines and a heavy swell or waves and which can be constructed with a relatively low dead weight.

There is a technical problem in being able to understand the significance of, the advantages related to and/or the technical measures and considerations which will be required for letting first and second means taking up tractive forces, such as in the form of one or more wires or the like, be attached to the first and second posts, preferably one on each side of and above and below a chosen attachment for one or more bar-shaped means.

There is a technical problem in being able to understand the significance of, the advantages related to and/or the technical measures and considerations which will be required for letting a bar-shaped means be attachable to its associated post within a defined intermediate area oriented between an indicated upper beam structure and a water surface belonging to the body of water.

There is a technical problem in being able to understand the significance of, the advantages related to and/or the technical measures and considerations which will be required for letting a beam unit, such as a horizontally oriented beam unit, be dimensioned for compressive forces, be adapted to cooperate with each one of the two posts and, in such case, close to but above a water surface belonging to the body of water.

There is a technical problem in being able to understand the significance of, the advantages related to and/or the technical measures and considerations which will be required for having one or more third means dimensioned for taking up a tractive force extend between a centrally oriented attachment point for said horizontal beam unit and an upper portion on the one hand for the first post and on the other hand for the second post or alternatively said beam structure.

There is a technical problem in being able to understand the significance of, the advantages related to and/or the technical measures and considerations which will be required for letting one or more fourth means dimensioned for taking up a tractive force be adapted to cooperate with the two posts and close to but somewhat above a water surface belonging to the body of water.

There is a technical problem in being able to understand the significance of, the advantages related to and/or the technical measures and considerations which will be required for letting the fourth means dimensioned for taking up a tractive force be oriented to extend between the lower portion of the first post and the upper portion of the second post or vice versa.

There is a technical problem in being able to understand the significance of, the advantages related to and/or the technical measures and considerations which will be required for letting a single generator unit be adapted, over a system transferring a rotational movement, to be enclosed in the beam structure and to be driven by a plurality of wind turbines associated with and carried by the beam structure.

There is a technical problem in being able to understand the significance of, the advantages related to and/or the technical measures and considerations which will be required for letting said upright be adapted and dimensioned to be able to cooperate with and/or enclose a transformer unit.

There is a technical problem in being able to understand the significance of, the advantages related to and/or the technical measures and considerations which will be required for letting a transformer unit be placed such within the upright that it will serve as a ballast.

There is a technical problem in being able to understand the significance of, the advantages related to and/or the technical measures and considerations which will be required for letting said first means with its arrangement and control unit be allotted to a land or an island based arrangement at least during one rotation of the propeller blade of the turbine to create an adapted turning or pitching.

### THE SOLUTION

The present invention takes as its starting point the known technology indicated by way of introduction for an arrangement related to a body of water for creating requisites from a prevailing wind force and wind direction for generating electric power, comprising a; individual but coordinated pontoon units that may float in the body of water, b; a plurality of, up to at least two, adjacent to each other oriented and coordinated turbines (wind-driven propellers), c; a mooring system tightly anchored to a restricted bottom area of said body of water, d; a generator unit which may be driven by the rotating motion of a turbine for generating said electric power, and e; a cable section connected on the one hand to said generator unit and on the other hand to a land based distribution network, distributing generated electric power.

In an arrangement of this type the present invention is based on that the propeller blade associated with said turbine and rotatable by the wind force shall with respect to a hub be rotatably disposed around a central line or an ascending profile allotted to the propeller blade.

Furthermore the invention is based on that a second means belonging to the arrangement is to be adapted to controllably hold the propeller blade of the turbine at right angles towards a virtual eye of the wind.

More specifically the present invention indicates that said first means is to be comprised of an arrangement for controlling the turning movement of the propeller blade during each revolution of rotation and that said first means can be adapted over the arrangement to permit the propeller blade to have different and adapted positions of rotation during one rotation only.

As proposed embodiments falling within the frame of the present invention it is indicated that said arrangement is over a control unit to be adapted to turn the propeller blade to a first position of rotation during a portion of its downward motion and adapted to turn the propeller blade to a second turning position during a portion of its upward motion.

Said arrangement may be controlled by a control unit for, in response to incoming signals i.a. in the form of relevant force of the wind, angular position of the propeller blade relative to its hub, the ascent position of the propeller blade and/or relevant windrelated disturbances, generating an outgoing signal for continuously changing the turning direction of the propeller blades towards maximized generated electric power.

The arrangement of the control unit is to be capable of being actuated by the distribution of the velocity of the wind within the rotational area of the propeller blades.

Said pontoon units are structured by and allotted at least two vertical or at any rate essentially vertical posts, which per se may float, for i.a. forming a frame portion and in any case an upright stabilizing the position of the frame portion in the body of water, with said two posts being adapted to be able to support a horizontally oriented beam structure which is flexurally rigid in itself, said beam structure being adapted and dimensioned such, that it can support said turbines and that each one of said two posts together with said uprights, are dimensioned and adapted such, that with their lower partial portions immersed in said body of water, they keep the frame portion floating over the water surface, wherein said upright is sidewise displaced a plane oriented through said frame portion and said two posts, with said upright being adapted to cooperate with said frame portion and to be attached to and fixedly be able to cooperate with said mooring system.

Between said upright and each one of the two posts, a first post and a second post, there extends a bar-shaped means dimensioned for taking up compressive force, and between said upright and each one of the first and second posts there extends at least one first means dimensioned for taking up a tractive force and in addition a second means dimensioned for taking up a tractive force.

As proposed embodiments falling within the frame of the present invention's basic concept it is additionally indicated that the first and second means, such as in the form of a wire or the like, shall be fastened to the first and second post on each side of and rigidly over and under the attachment of the bar-shaped means.

It is further indicated that the bar-shaped means is to be attached to its associated post within a defined middle area oriented between the beam structure and a water surface belonging to the body of water.

A beam unit, such as dimensioned for compressive forces, can be adapted to cooperate with the two posts close to but above a water surface belonging to the body of water.

Between a centrally oriented attachment point for said beam unit and upper portions of the first and second posts or alternatively said beam structure, there extends a third means dimensioned for taking up a tractive force.

A fourth means dimensioned for taking up a tractive force is to be adapted to cooperate with the two posts close to and somewhat above a water surface belonging to the body of water.

The fourth means dimensioned for taking up the tractive force is to be oriented to extend between the lower portion of the first post and the upper portion of the second post in the plane of the frame portion or vice versa.

A single generator unit is then to be adapted to be driven by a plurality of turbines associated with the beam structure over a system transferring rotational movement.

Said upright is to be adapted to cooperate with and/or enclose a transformer unit.

Said transformer unit should then be placed in such manner within the upright that it will serve as a ballast.

### ADVANTAGES

The advantages which primarily must be considered to be characterizing of the present invention and the thereby indicated specific significant characteristics are that hereby prerequisites have been created for being able to create prerequisites for generating electric power in an arrangement and from a prevailing wind force and wind direction.

Arrangements of this type can then include i.a. a; individual but coordinated pontoon units that may float in the body of water, b; a plurality of, up to at least two, adjacent to each other oriented and coordinated turbines (wind-driven propellers), c; a mooring system solidly anchored to a restricted bottom area of said body of water, d; a generator unit which may be driven by the rotating motion of a turbine for generating said electric power, and e; a cable section connected on the one hand to said generator unit and on the other hand to a land based distribution network distributing generated electric power.

More specifically, a first means is indicated, which is to comprise an arrangement for controlling the rotational movement of the propeller blade, the "pitching movement", during each of its revolution of rotation.

The subject matter, which must be considered to be characterizing of the present invention is disclosed in the characterizing portion of the subsequent claim 1.

### SHORT DESCRIPTION OF THE DRAWINGS

A presently proposed embodiment exhibiting the significant characteristics related to the present invention will now, with the purpose of exemplification, be more specifically disclosed with reference to the accompanying drawings, in which;
**Figure 1** shows a perspective view of an incoming flow of air to a three-bladed (or two-bladed) propeller of a turbine, furthermore the propeller itself, and an outgoing flow of air, and with a theoretic distribution of surface/pressure and speed,
**Figure 2** shows the distribution of compressive forces in a horizontal plane for a down-wardly moving propeller blade of a propeller with two blades and an upwardly directed propeller blade in said two-bladed propeller or the distribution of compressive forces between side-related turbines in a wind power plant supported by water,
**Figure 3** shows a wind power arrangement supported by water in a front view and viewed in a direction from an eye of the wind associated with the direction of the wind,
**Figure 4** shows a perspective view of a larger part of the arrangement according to Figure 3 exhibiting the significant characteristics and features related to the present invention,
**Figure 5** shows the arrangement, according to Figures 3 and 4, in a side view and parallel to a predominant direction of the wind,
**Figure 6** shows schematically and in the form of a block diagram a control unit significant for the invention and having an algorithm valid for the invention, and
**Figure 7** shows the principle of a stationary arrangement for wind power.

### DEFINITIONS

**"Pontoon units"** concerns one or more vertical posts (1, 2) and/or uprights (3) with their lower partial portions immersed in the body of water.
**"Beam structure"** concerns a flexurally rigid structure, which can support a chosen number of wind turbines and a generator unit, which can enclose a system transferring a rotational motion.
**"A bar-shaped means dimensioned for taking up compressive force"** concerns a structure, which primarily is dimensioned for being able to take up compressive forces but which also can take up tractive forces.
**"A means dimensioned for taking up a tractive force"** concerns a structure, which primarily is dimensioned for being able to take up tractive forces but with minor or no requirements of being able to take up compressive forces.
**"A first means"** is adapted to be able to rotate one or more propeller blades towards an adapted turning angle or "pitch angle".
**"A second means"** is adapted to be able to control a rotational movement associated with a propeller blade and/or the frame structure of a pontoon at right angles to the eye of the wind.

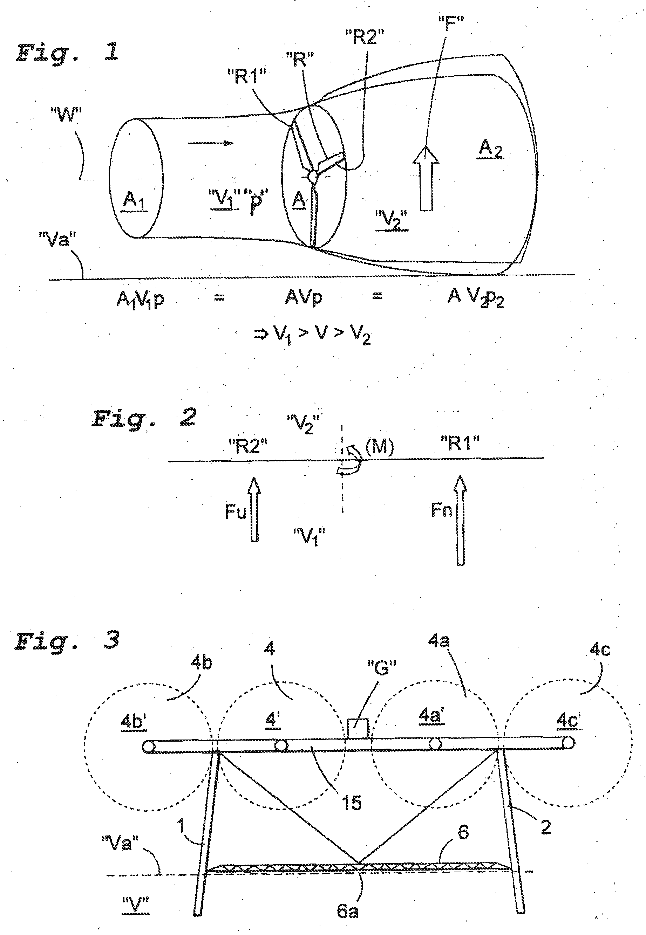

### BASIC CONSIDERATIONS ACCORDING TO FIGURES 1 AND 2, RESPECTIVELY.

When a wind-driven rotor (a propeller) rotates in a non-symmetrical environment the distribution of density and pressure of the passing air can also become non-symmetrical.

If we consider a rotor for the force of the wind, in accordance with Figure 1, for exemple the ground or surface of the water "Va" will comprise a limitation downwards direction which then does not exist upwards.

In viewing Figure 1 the incoming wind will have a certain speed "V₁" and density "p" and will be restricted by the area "A₁", whereas the speed "V₂" behind the rotor "R" or blades will be lower and the air will be spread to a greater cross-sectional surface "A₂".

The ideal cross-sectional area "A₂" is to be three times greater than that of the area "A₁", where the area of the rotor is chosen as "A".

As the speed "V₂" of the airflow cannot expand equally freely downwards non-symmetry is obtained.

The arrow "F", upwards in Figure 1, shows how the air is displaced somewhat upwards because of the disturbance from the ground or the surface "Va" of the water. Furthermore, in the same way non-symmetry may be found in the density "p" and pressure.

The compressive force on a rotor blade "R1" in its downwardly directed motion can then be slightly higher than that in its upwardly directed motion "R2" caused by this ground disturbance.

Figure 2 then shows that the compressive force "Fn" on a downwardly moving propeller half "R1" (in a two-bladed rotor) will be greater than the compressive force "Fu" on an upwardly moving propeller half "R2".

This gives rise to an unsymmetric torque ("M") on the rotor shaft and its hub.

With a plurality of coordinated turbines in a wind power plant supported by water the forces are coordinated.

With a higher force of the wind on turbines on the right hand side and a lower force of the wind on turbines on the left hand side the pontoon and frame are subjected to a torque ("M").

This torque then provides the rotor with a tendency to turn up from the eye "W" of the wind, i.e. it is turned in undesired manner so that the plane of the rotor blades no longer is at right angles to the direction of the wind.

### DESCRIPTION OF THE EMBODIMENT NOW PROPOSED

By way of introduction it should be pointed out that in the following specification covering a presently proposed embodiment which exhibits the significant characteristics related to the invention and which is clarified by the Figures shown in the following drawings we have selected terms and a specific terminology with the purpose of thereby primarily making the concept of the invention clear.

Thus, with reference to the accompanying drawings 3 to 6, not only is the present invention shown schematically and in detail, but also the significant qualities related to the invention have been concretized by the embodiment now proposed and more specifically described in the following.

Hence, Figures 3 to 5 show a wind power arrangement "A" related to a body of water for creating from a predominant force of the wind and direction of the wind from the eye of the wind "W" prerequisites for generating electric power.

The arrangement comprises a; individual but coordinated pontoon units 1, 2, 3 that may float in the body of water "V", b; a plurality of, at least two, adjacent to each other oriented and coordinated turbines 4, 4a, 4b, 4c, respectively (wind-driven propellers), c; a mooring system "M" solidly anchored to a restricted bottom area "B" of said body of water "V", d; a generator unit "G" which may be driven by the rotating motion of a turbine for generating said electric power, e; a cable section (not shown) connected on the one hand to said generator unit "G" and on the other hand to a land based distribution network (not shown) distributing generated electric power.

Said pontoon units 1, 2, 3 are structured by and allotted to at least two per se floatable, vertical or at least substantially vertical posts 1, 2 for together with additional structural elements and means forming a frame portion 12 and having at least one upright 3 stabilizing the position of a frame portion in the body of water.

Although the present invention in the following will be described as having two posts 1, 2 and one upright 3 it should be noted that this embodiment can be expanded with more posts and uprights than the ones shown and utilized here as a minimum requirement.

Said two posts 1, 2 are adapted for being able to support a horizontally oriented beam structure which is flexurally rigid in itself, said beam structure 5 being adapted and dimensioned such that it can support said turbines 4, 4a, 4b, 4c, and that each one of said two posts 1, 2 and said upright 3 are dimensioned and/or adapted such, that with their lower portions 1a, 2a, 3a immersed in said body of water "V" they keep the frame portion 12 floating over the water surface "Va" with said upright 3 being sidewise displaced a plane "P" oriented through said frame portion 12 and said two posts 1, 2.

The upright 3 is adapted on the one hand to cooperate "rotatably rigidly" with said frame portion 12 and on the other hand to be attached to and adheringly be able to cooperate with said mooring system "M".

A "rotatably rigid" attachment and cooperation imply that for the upright 3 and for the post 1 (alternatively the post 2) there is a bar-shaped means 10 which with its end portions is rotatably attached to upright 3 and to post 1 but with the rotatably rigid attachment being achieved over means 11, 12 taking up tractive forces.

Alternatively the means 12 (12a) can be replaced by a means 12a' attached to the upper portion 2b of post 2 and a flexurally rigid extension 10b allotted to a bar 10a.

More particularly the arrangement shows that between said upright 3 and each one of the two posts, a first post 1 and a second post 2, there extends a bar-shaped means dimensioned for taking up pressure, a means 10 for the left post 1 and similar means 10a for the right post 2.

Between said upright 3 and each one of the first post 1 and the second post 2 there extends on the one hand a first means 11 dimensioned for taking up a tractive force and in Figure 1 on the other hand a second means 12 dimensioned for taking up a tractive force.

The first means 11 is related to the left post 1 and the first means 11 a is related to the right post 2.

The second means 12 is related to the left post 1 and the second means 12a is related to the right post 2.

The first means 11, 11a and the second means 12, 12a, such as in the form of a wire with turnbuckles or the like, are attached to the first post 1 and the second post 2 in known manner, more specifically one on each side of and above the rotatable lower attachments 10' and 10a', respectively, for the bar-shaped means 10 and 10a, respectively.

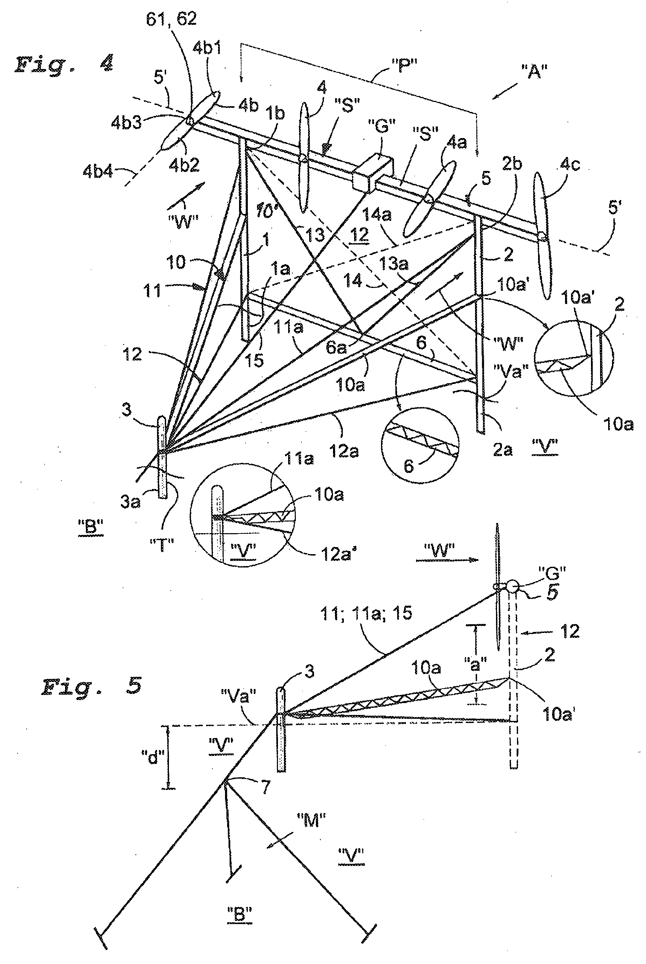

The bar-shaped means 10, 10a are attached to their associated posts 1 and 2, respectively, within a defined intermediate area "a" (see Figure 5) oriented between the beam structure 5 and a surface of water "Va" belonging to the body of water.

A beam unit 6 primarily dimensioned for compressive forces is adapted to cooperate rotatably with the two posts 1, 2 in the vicinity of but above a surface of water "Va" belonging to the body of water.

Between a centrally oriented attachment point 6a for said beam unit 6 and an upper portion 1 b for the first post 1 and an upper portion 2b for the second post 2, alternatively said beam structure 5, there extends a third means 13, 13a dimensioned for taking up a tractive force.

A fourth means 14 (shown in dashed lines in Figure 4) dimensioned for taking up a tractive force is adapted to cooperate with the two posts 1, 2 close to and slightly above a surface of water "Va" belonging to the body of water.

The fourth means 14, 14a dimensioned for taking up the tractive force are oriented to extend between the lower portion 1 a of the first post 1 and the upper portion 2b of the second post 2 or vice versa and are therefore only indicated in Figure 4.

One single generator unit "G" is adapted to be operated by a plurality of turbines 4, 4a, 4b, 4c allotted to beam structure 5 over a system "S" transferring a rotational movement. In some applications it might be advantages to use more than one generator.

Said upright 3 is adapted to be able to cooperate with and/or enclose a transformer unit "T".

Said transformer unit "T" is then placed such within the upright 3 that it will serve as a ballast for said upright 3.

Coordinating means in the form of wires taking up tractive forces are in cooperation with and in association with bars or the like taking up compressive forces to form a firm structure of a triangle.

The number of turbines 4, 4a, 4b, 4c which are to be coordinated with beam structure 5 is chosen to exceed two and to be lower than six, such as four.

All of the wind turbines 4, 4b; 4a, 4c are adapted for directly cooperating with the system "S" transferring the rotational movement for synchronous operation of the propellers.

In said synchronous operation the propellers of the individual turbines 4 - 4c are adapted to overlap the circular surface 4', 4a', 4b' and 4c' of coverage of each other.

Said bar-shaped means 1, 2, 3, 5, 6, 10 and 10a for taking up a compressive force are structured as one or more pipe portions, one or more framework structures, for thereby decreasing the dead weight.

More specifically, the latter are to be allotted minor or no ability to float and are to have a small surface of actuation for the wind and/or the waves.

Said wind turbine and/or wind turbines are disposed and adapted to cooperate directly with the system "S" transferring the rotational movement without associated gear boxes.

Said vertically oriented posts 1, 2 can then be allotted a circular or elliptical, or at least essentially cirular or elliptical, cross-section with their main axes or major axes oriented parallel to the lengthwise orientation 5' of the beam structure 5.

Each one of said posts 1, 2 and the upright 3 can be hollow so as to form a body that may float and that has a cylindrical or an elliptical cross-section or some other cross-section.

Reducing the actuation and effect of a wave motion occurs by reducing the surface, which is intended to face the eye of the wind, wherein this surface can be a framework of known technology.

Each one of or chosen means 10, 10a; 1, 2, 3; 5; 6 for taking up pressure are end relatedly attached each to a joint connection, with such joint connection having the reference designation 10a', such as posts 1, 2.

All the turbine 4 - 4c are coordinated in one and the same or at least essentially one and the same vertical plane, such as a plane "P" through frame portion 12 and the side-related beam structure 5.

Said two posts 1, 2 within said frame portion 12 are in a vertical plane "P" allotted a converging orientation upwards in accordance with Figure 3.

The converging orientation is intended to relieve the stresses of the compressive forces on the lower beam unit 6 which at that time can be replaced by one or more fourth means designated 14,14a for taking up one or more tractive forces.

Said upright 3 is adapted to take a vertical position over the actuation of a ballast and exhibits via means 10, 11, 12; 10a, 11a, 12a (12a') a flexurally rigid attachment to said posts 1, 2.

A chosen anchoring system "M" is adapted to exhibit a well-defined point 7 of fixation.

Said point 7 of fixation is adapted to such depth "d" below the surface of the water "Va" that for an increasing and higher wind force this point 7 of fixation will lower upright 3 so as in such manner to reduce the angular setting of the pontoon unit and the frame portion 12 in relation to a vertical plane "P".

Said beam structure 5 has the form of a hollow profile and surrounds the mentioned system "S" transferring rotational motion for driving a generator unit "G", wherein said generator unit should be centrally oriented with regard to the beam structure 5.

Thus, the present invention has the purpose of in an exemplified, above described arrangement indicating the use of that said turbine's 4b associated, by the wind force rotatable propeller blade 4b1; 4b2 shall with regard to a hub 4b3 be rotatably disposed around a central line 4b4 or rising profile allotted to the propeller blade and a means belonging to arrangement "A" for retaining the propeller blade of the turbine at right angles to a virtual eye of the wind "W".

The same structure is to be allotted to the other turbines 4, 4a, 4c.

More particularly it is indicated that said first means 61 is to be comprised of an arrangement 62 for controlling the rotational movement of the propeller blade during its rotation and that said means 61 further can be adapted to provide the propeller blade with different rotational positions within an oscillating sequence over arrangement 62.

More particularly said arrangement 62 is to be adapted to turn propeller blade 4b1 to a first position of rotation during a portion of or its entire downwardly going motion and is to be adapted to turn the propeller blade 4b2 (or 4b1) to a second position of rotation during a portion of or its entire upwardly going motion.

Said arrangement 62 is then to be controllable by a control unit 63 for in response to incoming signals 63a, i.a. in the form of a relevant wind force 63a1, the angular setting 63a2 of the propeller blade relatively to its hub, the profile of the ascent profile 63a3 of the propeller blades and/or relevant disturbances 63a4 of air, generating an outgoing signal 63b for changing the rotational positions of the propeller blades towards maximized generated electric power in the output signals 63b1, 63b2, 63b3 and 63b4 for the propeller blades related to turbines 4b, 4, 4a and 4c.

The incoming signals shall also take considerations of the instantanous position of rotation of the propeller blade, of whether the motion is going downwardly or upwardly, over input signals 63a6.

The arrangement 62 is to be actuable by control unit 61 of the distribution of the wind within the area of rotation of the propeller blade over an input signal 63a5.

The result, which has been disclosed i connection with Figures 1 and 2, leads to a torque (M) on each one of the rotors in Figure 3 alternatively for coordinated rotors or propeller blades.

The total result will be a rotation of the entire floating structure or arrangement "A" out of the eye of the wind "W".

Naturally this oblique position is limited by other effects that wish to straighten up the structure towards the eye of the wind, but correction factors can be introduced also for these other effects.

It can also occur that wind is not entirely equally distributed sideways.

The relevant platform for arrangement "A", according to Figures 3 to 5, respectively, has a width of over 200 meters, and therefore variations occuring in the speed of the wind must be taken into consideration. This also leads to that turning the platform will become necessary by other means so that it can take its best angle with regard to the main direction.

In order to achieve maximum production of power the structure will have to be yawed and adapted in optimal manner.

An established method of controlling the number of revolutions of the rotor by a wind force is controllably to change the angle of the propeller blade more or less abeam the direction of the wind ("pitch control"). This method is also used for braking the rotation of the propeller blades aerodynamically.

When the rotor blades 4b1, 4b2 are being rotated or "pitched" around their respective longitudinal axes 4b4 the resulting compressive force on the rotor will be changed.

The invention is based on controlling the blade angle of the propeller blades individually over control unit 61.

Each turbine unit 4 - 4c can be allotted its own blade angle (pitch angle) over control unit 61, said angle being adapted such, that the entire platform and arrangement "A" can have a net torque such that it is retained in a position which produces the most power.

Alternatively the blade angle of each propeller blade can be controlled such, that the blade angle is changed during one revolution of the propeller so that the blade in a downwardly directed motion reduces the compressive force from the wind which creates the earlier described undesired torque out of the plane.

The advantage with the solution that is proposed here is that the principle of and the structure of a blade angle control already is available in stationary wind power turbines for other reasons, although however the latter are adapted for slow control function and processes however the angle control, according to the present invention, is adapted for a more rapid control function following the blade rotation movement around its hub.

Another advantage lies in procuring sufficient power for steering the platform and the arrangement "A" against the wind from directly withdrawn wind power, which can provide very great forces.

The invention is based on letting the motion of the platform be controlled very rapidly on the one hand by said first means and on the other hand by said second means.

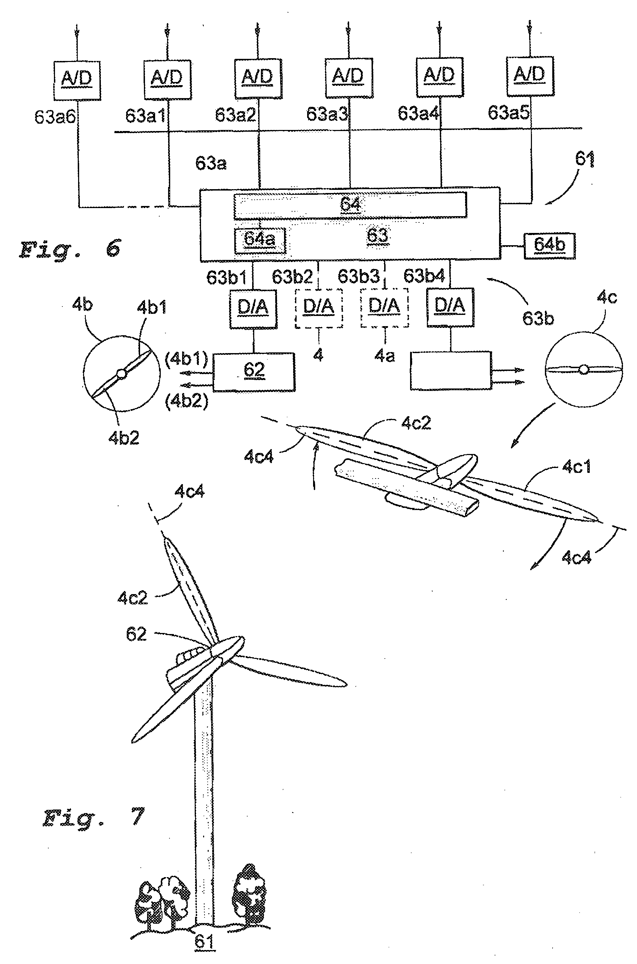

An additional reference to the illustrated embodiment in accordance with Figure 6 illustrates the use of a plurality of input signals, either all the available input signals from each one of the turbines 4 - 4c and sensors coordinated with them or solely from chosen sensors.

These input signals are allowed to pass their A/D-converter to a calculation circuit 64 by means of a central unit 64a and a chosen algorithm 64b.

Calculated output signals 63b, such as signals 63b1 and 63b2 for turbines 4b and 4c (turbines 4, 4a are not illustrated), are supplied to a D/A-converter for individually regulating and controlling the rotational positions of the propeller blades 4b1, 4b2, i.a. depending on the upwardly or downwardly going direction of rotation of the propeller blade, over input signals 63a6 or other control signals for the wind power and its direction.

The invention is of course not limited to the embodiment disclosed above as an example, and it is defined by the following claims.

## Claims

1. A wind power arrangement ("A") related to a body of water ("V") for creating prerequisites from a predominant wind force for generating electric power, comprising:
a) individual but connected pontoon units (1, 2, 3) that may float in the body of water ("V"),
b) a plurality of, at least two, adjacent to each other oriented and coordinated turbines, namely wind-driven propellers (4b, 4, 4a, 4c),
c) a mooring system ("M") solidly anchored to a restricted bottom area (B) of said body of water ("V"),
d) a generator unit ("G") which may be driven by the rotating motion of a turbine for generating said electric power, and
e) a cable section connected on the one hand to said generator unit ("G") and on the other hand to a land based distribution network distributing generated electric power,
wherein said pontoon units comprise at least two essentially vertical posts (1, 2) which may float per se, for forming a frame portion (12), and at least one upright (3) stabilizing the position of the frame portion (12) in the body of water,
wherein said two posts (1, 2) are adapted to support a horizontally oriented beam structure (5) which is flexurally rigid in itself, said beam structure being adapted and dimensioned to support said turbines (4b, 4, 4a, 4c),
wherein each one of said two posts (1, 2) together with said upright (3) is dimensioned and/or adapted such that with their lower portions (1, 2a, 3a) immersed in said body of water ("V") they keep the frame portion (12) floating over the water surface ("Va"),
wherein said upright (3) is arranged at a distance from a plane ("P") containing said frame portion (12) and said two posts (1, 2), and wherein said upright (3) is connected to said frame portion (12) via bar-shaped means (10, 10a) dimensioned for taking up a compressive force and extending between said upright (3) and each one of the two posts, a first post (1) and a second post (2), and wherein said upright (3) is adapted to be attached to and cooperate with said mooring system ("M"),
**characterized in that** the wind power arrangement ("A") further comprises:
rotatable propeller blades (4b1, 4b2) allotted to said turbines and rotatable by the wind force which are pitchably disposed around a central line (4b4) or ascent profile of the propeller blade (4b1, 4b2) with regard to a hub (4b3), and
a first means (61) in the form of a control unit (63) adapted to control the rotational movement of the propeller blade (4b1, 4b2) with regard to the hub (4b3) during its rotation through an arrangement (62),
wherein said first means (61) and its associated arrangement (62) are further adapted to assign different positions of rotation, i.e. different pitch angles, to the propeller blade (4b1, 4b2) with regard to the hub (4b3) during one revolution which cause the wind power arrangement ("A") to turn so that it can take the best angle with regard to a main wind direction.

2. The wind power arrangement in accordance with claim 1, wherein said arrangement (62) is adapted to rotate the propeller blade (4b1, 4b2) to a first position of rotation with regard to the hub (4b3) during part of its downwardly directed motion and is adapted to rotate the propeller blade (4b1, 4b2) to a second position of rotation with regard to the hub (4b3) during part of its upwardly directed motion.

3. The wind power arrangement in accordance with claim 1 or 2, wherein said arrangement (62) is controllable by a control unit (63) for, in response to input signals (63a) comprising relevant wind force (63a1), angular position (63a2) of the propeller blade (4b1, 4b2) in relation to the hub (4b3), ascent profile (63a3) of the propeller blade (4b1, 4b2) and/or relevant disturbances, generating an output signal (63b1) for changing the position of rotation of the propeller blades (4b1, 4b2) with regard to the hub (4b3) towards maximized generated electric power.

4. The wind power arrangement in accordance with claim 3, wherein by the control unit (63) the arrangement (62) is actuated by the distribution of the speed of the wind within the rotational field of the propeller blade (4b1, 4b2).

5. The wind power arrangement in accordance with claim 1, further comprising at least one first means (11, 11 a) and in addition a second means (12a, 12a') dimensioned for taking up a tractive force and extending between said upright (3) and each one of the first (1) and second (2) posts.

6. The wind power arrangement in accordance with claim 5, wherein the first and second means (11, 11 a; 12a, 12a'), such as in the form of a wire, are attached to the first and second posts (1, 2) each above and below an attachment (10', 10a') for the bar-shaped means (10, 10a).

7. The wind power arrangement in accordance with claim 5 or 6, wherein the bar-shaped means (10, 10a) is attached to its associated post (1, 2) in a defined middle area ("a") situated between the beam structure (5) and a water surface ("Va") belonging to the body of water ("V").

8. The wind power arrangement in accordance with claim 5, further comprising a beam unit (6) dimensioned for compressive forces and adapted to cooperate with the two posts (1, 2) in the vicinity of but above a water surface ("Va") belonging to the body of water ("V").

9. The wind power arrangement in accordance with claim 8, further comprising a third means (13, 13a) dimensioned for taking up a tractive force and extending between a centrally located attachment point (6a) on said beam unit (6) and an upper portion (1 b, 2b) of the first (1) and the second (2) post or alternatively said beam structure (5).

10. The wind power arrangement in accordance with any one of the preceding claims, further comprising a fourth means (14, 14a) dimensioned for taking up a tractive force and adapted to cooperate with the two posts (1, 2) in the vicinity of and somewhat above a water surface ("Va") belonging to the body of water ("V").

11. The wind power arrangement in accordance with claim 10, wherein the fourth means (14, 14a) is arranged to extend between a lower portion of the first post (1) and an upper portion (2b) of the second post (2), and vice versa.

12. The wind power arrangement in accordance with any one of the preceding claims, further comprising one single generator unit ("G") or a plurality of such units adapted to be driven by a plurality of wind turbines allotted to the beam structure over a system ("S") transferring a rotational motion.

13. The wind power arrangement in accordance with any one of the preceding claims, wherein said upright (3) is adapted to cooperate with and/or enclose a transformer unit ("T").

14. The wind power arrangement in accordance with claim 13, wherein said transformer unit ("T") is positioned such within the upright (3) that it will serve as a ballast.

## Patentansprüche

1. Windturbinenanordnung ("A") in Verbindung mit einem Gewässer ("V") zum Schaffen von Voraussetzungen aus einer vorherrschenden Windkraft zum Erzeugen von elektrischer Energie umfassend:
a) einzelne, aber verbundene Ponton-Einheiten (1, 2, 3), die im Gewässer ("V") schwimmen können,
b) eine Mehrzahl von, mindestens zwei, benachbart zueinander ausgerichteten und koordinierten Turbinen, und zwar windbetriebenen Propellern (4b, 4, 4a, 4c),
c) ein Verankerungssystem ("M"), das an einem beschränkten Bodenbereich (B) des Gewässers ("V") fest verankert ist,
d) eine Generatoreinheit ("G"), die durch die Drehbewegung einer Turbine zum Erzeugen der elektrischen Energie angetrieben werden kann, und
e) einen Kabelabschnitt, der einerseits mit der Generatoreinheit ("G") und andererseits mit einem landbasierten Verteilungsnetz verbunden ist, das die erzeugte elektrische Energie verteilt,
wobei die Ponton-Einheiten mindestens zwei im Wesentlichen vertikale Pfosten (1, 2), die an sich schwimmen können, zum Bilden eines Rahmenabschnitts (12) und mindestens einen Ständer (3) umfassen, der die Position des Rahmenabschnitts (12) im Gewässer stabilisiert,
wobei die beiden Pfosten (1, 2) so ausgelegt sind, dass sie eine horizontal ausgerichtete Balkenstruktur (5) tragen, die an sich biegesteif ist, wobei die Balkenstruktur so ausgelegt und bemessen ist, dass sie die Turbinen (4b, 4, 4a, 4c) trägt,
wobei jeder der beiden Pfosten (1, 2) zusammen mit dem Ständer (3) derart bemessen und/oder ausgelegt ist, dass sie mit ihren unteren Abschnitten (1, 2a, 3a) eingetaucht in das Gewässer ("V") den Rahmenabschnitt (12) schwimmend auf der Wasseroberfläche ("Va") halten,
wobei der Ständer (3) in einem Abstand von einer Ebene ("P") angeordnet ist, die den Rahmenabschnitt (12) und die beiden Pfosten (1, 2) enthält, und wobei der Ständer (3) mit dem Rahmenabschnitt (12) über stangenförmige Mittel (10, 10a) verbunden ist, die zum Aufnehmen einer Druckkraft bemessen sind und sich zwischen dem Ständer (3) und jedem der beiden Pfosten, einem ersten Pfosten (1) und einem zweiten Pfosten (2), erstrecken, und wobei der Ständer (3) so ausgelegt ist, dass er am Verankerungssystem ("M") befestigt ist und damit zusammenwirkt,
**dadurch gekennzeichnet, dass**
die Windturbinenanordnung ("A") ferner umfasst:
drehbare Propellerflügel (4b1, 4b2), die auf die Turbinen verteilt sind, durch die Windkraft gedreht werden können und um eine Mittellinie (4b4) oder ein Steigungsprofil des Propellerflügels (4b1, 4b2) in Bezug auf eine Nabe (4b3) verstellbar angeordnet sind, und
ein erstes Mittel (61) in Form einer Steuereinheit (63), das so ausgelegt ist, dass es die Drehbewegung des Propellerflügels (4b1, 4b2) in Bezug auf die Nabe (4b3) während seiner Drehung durch eine Anordnung (62) steuert,
wobei das erste Mittel (61) und seine zugehörige Anordnung (62) ferner so ausgelegt sind, dass sie dem Propellerflügel (4b1, 4b2) während einer Umdrehung verschiedene Drehpositionen, d. h. verschiedene Einstellwinkel, in Bezug auf die Nabe (4b3) zuordnen, welche die Windturbinenanordnung ("A") veranlassen, sich so zu drehen, dass sie den besten Winkel in Bezug auf eine Hauptwindrichtung einnehmen kann.

2. Windturbinenanordnung nach Anspruch 1, wobei die Anordnung (62) so ausgelegt ist, dass sie den Propellerflügel (4b1, 4b2) während des Teils seiner abwärts gerichteten Bewegung in eine erste Drehposition in Bezug auf die Nabe (4b3) dreht, und so ausgelegt ist, dass sie den Propellerflügel (4b1, 4b2) während des Teils seiner aufwärts gerichteten Bewegung in eine zweite Drehposition in Bezug auf die Nabe (4b3) dreht.

3. Windturbinenanordnung nach Anspruch 1 oder 2, wobei die Anordnung (62) durch eine Steuereinheit (63) gesteuert werden kann, um in Reaktion auf Eingangssignale (63a), welche relevante Windkraft (63a1), Winkelposition (63a2) des Propellerflügels (4b1, 4b2) in Bezug auf die Nabe (4b3), Steigungsprofil (63a3) des Propellerflügels (4b1, 4b2) und/oder relevante Störungen umfassen, ein Ausgangssignal (63b1) zum Ändern der Drehposition der Propellerflügel (4b1, 4b2) in Bezug auf die Nabe (4b3) zu maximierter erzeugter elektrischer Energie zu erzeugen.

4. Windturbinenanordnung nach Anspruch 3, wobei durch die Steuereinheit (63) die Anordnung (62) durch die Verteilung der Geschwindigkeit des Windes innerhalb des Drehfeldes des Propellerflügels (4b1, 4b2) betätigt wird.

5. Windturbinenanordnung nach Anspruch 1, ferner umfassend mindestens ein erstes Mittel (11, 11a) und zusätzlich ein zweites Mittel (12a, 12a'), die zum Aufnehmen einer Zugkraft bemessen sind und sich wischen dem Ständer (3) und jedem der ersten (1) und zweiten (2) Pfosten erstrecken.

6. Windturbinenanordnung nach Anspruch 5, wobei die ersten und zweiten Mittel (11, 11a; 12a, 12a'), beispielsweise in Form eines Seils, an den ersten und zweiten Pfosten (1, 2) jeweils über und unter einer Anordnung (10', 10a') für die stangenförmigen Mittel (10, 10a) befestigt sind.

7. Windturbinenanordnung nach Anspruch 5 oder 6, wobei das stangenförmige Mittel (10, 10a) in einem definierten Mittelbereich ("a"), der sich zwischen der Balkenstruktur (5) und einer zum Gewässer ("V") gehörigen Wasseroberfläche ("Va") befindet, an seinem zugehörigen Pfosten (1, 2) befestigt ist.

8. Windturbinenanordnung nach Anspruch 5, ferner umfassend eine Balkeneinheit (6), die für Druckkräfte bemessen und zum Zusammenwirken mit den beiden Pfosten (1, 2) benachbart zu, aber über einer zum Gewässer ("V") gehörigen Wasseroberfläche ("Va") ausgelegt ist.

9. Windturbinenanordnung nach Anspruch 8, umfassend ein drittes Mittel (13, 13a), das zum Aufnehmen einer Zugkraft bemessen ist und sich zwischen einem mittig angeordneten Befestigungspunkt (6a) auf der Balkeneinheit (6) und einem oberen Abschnitt (1b, 2b) der ersten (1) und zweiten (2) Pfosten oder alternativ der Balkenstruktur (5) erstreckt.

10. Windturbinenanordnung nach einem der vorhergehenden Ansprüche, ferner umfassend ein viertes Mittel (14, 14a), das zum Aufnehmen einer Zugkraft bemessen und zum Zusammenwirken mit den beiden Pfosten (1, 2) benachbart zu und etwas über einer zum Gewässer ("V") gehörigen Wasseroberfläche ("Va") ausgelegt ist.

11. Windturbinenanordnung nach Anspruch 10, wobei das vierte Mittel (14, 14a) so angeordnet ist, dass es sich zwischen einen unteren Abschnitt des ersten Pfostens (1) und einem oberen Abschnitt (2b) des zweiten Pfostens (2) erstreckt und umgekehrt.

12. Windturbinenanordnung nach einem der vorhergehenden Ansprüche, ferner umfassend eine einzige Generatoreinheit ("G") oder eine Mehrzahl von solchen Einheiten, die so ausgelegt sind, dass sie durch eine Mehrzahl von Windturbinen angetrieben werden, die an der Balkenstruktur über ein System ("S") verteilt sind, das eine Drehbewegung überträgt.

13. Windturbinenanordnung nach einem der vorhergehenden Ansprüche, wobei der Ständer (3) so ausgelegt ist, dass er mit einer Transformatoreinheit ("T") zusammenwirkt oder diese beherbergt.

14. Windturbinenanordnung nach Anspruch 13, wobei die Transformatoreinheit ("T") derart innerhalb des Ständers (3) angeordnet ist, dass sie als ein Ballast dient.

## Revendications

1. Centrale éolienne (« A ») relative à une étendue d'eau (« V ») permettant la création de conditions préalables à partir d'une force de vent prédominante destinée à générer de l'énergie électrique, comprenant :
**a)** des unités de ponton individuelles mais raccordées (1, 2, 3) qui peuvent flotter sur l'étendue d'eau (« V »),
**b)** une pluralité de turbines, au moins deux, adjacentes l'une à l'autre, orientées et coordonnées, c'est-à-dire des hélices entraînées par le vent (4b, 4, 4a, 4c),
**c)** un système d'amarrage (« M ») solidement ancré à une zone inférieure d'accès restreint (B) de ladite étendue d'eau (« V »),
**d)** une unité de génératrice (« G ») qui peut être entraînée par le mouvement d'une turbine afin de générer ladite énergie électrique, et
**e)** une section de câblage reliée d'un côté à ladite unité de génératrice (« G »), et de l'autre côté à un réseau de distribution à terre répartissant l'énergie électrique générée,
dans laquelle lesdites unités de ponton comprennent au moins deux poteaux sensiblement verticaux (1, 2) qui peuvent flotter par eux-mêmes afin de fournir un châssis (12) ainsi qu'au moins un poteau droit (3) stabilisant la position du châssis (12) dans l'étendue d'eau,
dans laquelle lesdits deux poteaux (1, 2) sont conçus pour supporter une structure de poutre (5) rigide par elle-même en flexion, ladite structure de poutre étant conçue et dimensionnée pour supporter lesdites turbines (4b, 4, 4a, 4c),
dans laquelle chacun desdits deux poteaux (1, 2), tout comme ledit poteau droit (3) sont dimensionnés et/ou adaptés de telle sorte que, leurs parties inférieures (1, 2a, 3a) étant immergées dans ladite étendue d'eau (« V »), ils maintiennent le châssis (12) flottant sur la surface de l'eau (« Va »),
dans laquelle ledit poteau droit (3) est agencé à une certaine distance d'un plan (« P ») contenant ledit châssis (12) et lesdits deux poteaux (1, 2), ledit poteau droit (3) étant relié au dit châssis (12) par des organes en forme de barres (10, 10a) dimensionnés pour absorber une force de compression et s'étendant entre ledit poteau droit (3) et chacun des deux poteaux, un premier poteau (1) et un deuxième poteau (2), et où ledit poteau droit (3) est conçu pour être fixé au dit système d'amarrage (« M ») et pour coopérer avec celui-ci,
**caractérisée en ce que**
la centrale éolienne (« A ») comprend en outre :
des pales rotatives de turbines (4b1, 4b2) attribuées aux dites turbines et pouvant tourner sous la force du vent, lesquelles sont disposées en pas autour d'un axe central (4b4) ou du profil ascendant de la pale de turbine (4b1, 4b2) par rapport à un moyeu (4b3), et,
un premier organe (61), sous la forme d'une unité de commande (63), conçue pour contrôler le mouvement de rotation de la pale de turbine (4b1, 4b2) par rapport au moyeu (4b3) pendant sa rotation au travers d'un agencement (62),
dans laquelle ledit premier organe (61) et son agencement associé (62) sont en outre conçus pour affecter différentes positions de rotation, c'est-à-dire différents angles de pas, à la pale de turbine (4b1, 4b2) par rapport au moyeu (4b3) pendant une révolution qui amène la rotation de la centrale éolienne (« A ») de telle sorte qu'elle puisse prendre le meilleur angle par rapport à la direction principale du vent.

2. Centrale éolienne selon la revendication 1, dans laquelle ledit agencement (62) est conçu pour faire tourner la pale de turbine (4b1, 4b2) vers une première position de rotation par rapport au moyeu (4b3) pendant une fraction de son mouvement dirigé vers le bas, et il est conçu pour faire tourner la pale de turbine (4b1, 4b2) vers une seconde position de rotation par rapport au moyeu (4b3) pendant une fraction de son mouvement dirigé vers le haut.

3. Centrale éolienne selon la revendication 1 ou la revendication 2, dans laquelle ledit agencement (62) peut être commandé par une unité de commande (63) pour générer un signal de sortie (63b1), en réponse à des signaux d'entrée (63a) comprenant la force du vent qui s'y rapporte (63a1), la position angulaire (63a2) de la pale de turbine (4b1, 4b2) par rapport au moyeu (4b3), le profil ascendant (63a3) de la pale de turbine (4b1, 4b2) et/ou des perturbations s'y rapportant, pour modifier la position de rotation des pales de turbines (4b1, 4b2) par rapport au moyeu (4b3) en recherchant une énergie électrique générée maximisée.

4. Centrale éolienne selon la revendication 3, dans laquelle l'agencement (62) est actionné, grâce à l'unité de commande (63), par la répartition la vitesse du vent dans le champ de rotation de la pale de turbine (4b1, 4b2).

5. Centrale éolienne selon la revendication 1, comprenant en outre au moins un premier organe (11, 11a) et, en addition, un deuxième organe (12a, 12a') dimensionnés pour absorber une force de traction, et s'étendant entre ledit poteau droit (3) et chacun du premier (1) et du deuxième (2) poteau.

6. Centrale éolienne selon la revendication 5, dans laquelle les premier et deuxième organes (11, 11a ; 12a, 12a'), sous la forme d'un câble, sont fixés aux premier et deuxième poteaux (1, 2), chacun se trouvant au-dessus et en-dessous d'une fixation (10', 10a') pour les organes en forme de barres (10, 10a).

7. Centrale éolienne selon la revendication 5 ou la revendication 6, dans laquelle les organes en forme de barres (10, 10a) sont fixés à leur poteau (1, 2) associé dans une zone médiane définie (« a ») située entre la structure de poutre (5) et la surface de l'eau (« Va ») appartenant à l'étendue d'eau (« V »).

8. Centrale éolienne selon la revendication 5, comprenant en outre une unité formant poutre (6) dimensionnée pour des forces de compression et conçue pour coopérer avec les deux poteaux (1, 2) au voisinage de la surface de l'eau (« Va ») appartenant à l'étendue d'eau (« V »), mais au-dessus.

9. Centrale éolienne selon la revendication 8, comprenant en outre un troisième organe (13, 13a) dimensionné pour absorber une force de traction et s'étendant entre un point de fixation situé au centre (6a) sur ladite unité de poutre (6) et une partie supérieure (1b, 2b) du premier (1) et du deuxième (2) poteau, ou bien en variante, avec ladite structure de poutre (5).

10. Centrale éolienne selon l'une quelconque des revendications précédentes, comprenant en outre un quatrième organe (14, 14a) dimensionné pour absorber une force de traction et conçu pour coopérer avec les deux poteaux (1, 2) au voisinage de la surface de l'eau (« Va ») appartenant à l'étendue d'eau (« V ») et un peu au-dessus.

11. Centrale éolienne selon la revendication 10, dans laquelle le quatrième organe (14, 14a) est agencé pour s'étendre entre la partie inférieure du premier poteau (1) et la partie supérieure (2b) du deuxième poteau (2), et vice versa.

12. Centrale éolienne selon l'une quelconque des revendications précédentes, comprenant en outre une unité de génératrice (« G ») unique ou une pluralité de génératrices de ce type conçues pour être entraînées par une pluralité d'éoliennes affectées à la structure de poutre sur un système (« S ») de transfert de mouvement de rotation.

13. Centrale éolienne selon l'une quelconque des revendications précédentes, dans laquelle ledit poteau droit (3) est conçu pour coopérer avec une unité de transformateur (« T ») et/ou pour la renfermer.

14. Centrale éolienne selon la revendication 13, dans laquelle ladite unité de transformateur (« T ») est positionnée à l'intérieur du poteau droit (3) de telle sorte qu'elle peut servir de ballast.
